# EUROPEAN PATENT SPECIFICATION

(11) **EP 4 044 520 B1**
(45) Date of publication and mention of the grant of the patent: **16.10.2024**
(21) Application number: 21156281.4
(22) Date of filing: 10.02.2021
(51) Int. Cl.: H04L 43/028, H04L 43/18, H04L 41/14

(54) **SYSTEM FOR ANALYZING DATA TRAFFIC AND DATA TRAFFIC ANALYSIS METHOD**
SYSTEM ZUR ANALYSE VON DATENVERKEHR UND VERFAHREN ZUR ANALYSE VON DATENVERKEHR
SYSTÈME D'ANALYSE DE TRAFIC DE DONNÉES ET PROCÉDÉ D'ANALYSE DE TRAFIC DE DONNÉES

(43) Date of publication of application: 17.08.2022
(73) Proprietor: Rohde & Schwarz GmbH & Co. KG, 81671 München (DE)
(72) Inventor: Urban, Stefan, 81671 München (DE)
(74) Representative: Novagraaf Group

(56) References cited:
- US-A1- 2018 234 309
- US-A1- 2020 366 717
- LEO LEHMANN OFCOM ET AL: "Draft Recommendation ITU-T Y.2774: Functional requirements of deep packet inspection for future networks;TD158/PLEN", vol. 7/13, 19 July 2019 (2019-07-19), pages 1 - 18, XP044268597, Retrieved from the Internet <URL:https://www.itu.int/ifa/t/2017/sg13/docs/191014/td/ties/plen/T17-SG13-191014-TD-PLEN-0158!!MSW-E.docx> [retrieved on 20190719]

## Description

The invention relates to a system for analyzing data traffic. The invention further relates to a data traffic analysis method for analyzing data traffic.

For many types of applications, analyzing data traffic in data networks is important, e.g. in order to guarantee network safety, check the network functionality, or handle data traffic loads correctly.

One known data traffic analysis method is called "deep packet inspection", also known as packet sniffing, wherein not only the header of data packets is inspected, but also the payload portion of the data packets. Generally, deep packet inspection is a type of data processing that inspects in detail the data being sent over a network, and may take actions such as alerting, blocking, re-routing, or logging it accordingly.

Analyzing data traffic using deep packet inspection techniques requires large amounts of computing resources in order to perform the analysis in real-time or near real-time.

This becomes an ever-increasing problem due to the large data rates that can be achieved in modern data networks, particularly in data networks employing the 5G standard.

US 2020/366717 A1 discloses a network device comprising a deep packet inspection classifier, and a machine learning classifier. The deep packet inspection classifier is configured to determine a first classification for an application by means of a deep packet inspection technique. The machine learning classifier is configured to determine a second classification for the application by means of a machine learning classification technique. The network device accepts the classification obtained by the deep packet inspection classifier or the classification obtained by the machine learning classifier, and processes traffic according to a policy associated with the accepted classification.

Thus, the object of the present invention is to provide a system for analyzing data traffic and a data traffic analysis method that allow for a more resource-efficient analysis of data traffic.

According to the invention, the problem is solved by a system for analyzing data traffic according to claim 1.

According to the invention, at least one of the data processing units, namely the first data processing unit and/or the second data processing unit, processes a bulk of data packets instead of individual data packets. Particularly, all data processing units may respectively process a bulk of data packets instead of individual data packets.

Due to this bulk-processing approach, a higher data analysis rate can be achieved than by analyzing individual data packets. Furthermore, the computational resources required may be reduced due to the bulk-processing approach.

Moreover, according to the invention the different deep packet inspection techniques are not carried out by a single data processing unit. Instead, the different deep packet inspection techniques are allocated to different data processing units.

Due to the distribution of different deep packet inspection functionalities to different data processing units, an increased flexibility for scheduling the analysis of different aspects of the data stream(s) is obtained.

It has turned out that the overall performance of the system increases due to this modular approach.

In addition, the respective different data processing units may be specified according to the corresponding deep packet inspection technique applied, thereby improving the overall efficiency.

The individual data processing units may be established in hardware and/or software, respectively. For example, each data processing unit may be established as a computer program being executed on one or several CPUs, on one or several GPUs, or on other suitable types of electronic processing circuitry.

The individual data processing units may all be part of the same computer system or may be established on different computer systems, e.g. on different servers.

The data distribution circuit may comprise a distribution unit that is configured to distribute the data stream(s) to the individual data processing units, particularly to the first data processing unit and/or to the second data processing unit. The data distribution circuit may further comprise connectors, cables, wireless connections, and/or further distribution units that are configured to distribute the data streams after a first processing by the first data processing unit and/or the second data processing unit.

Alternatively or additionally, if the individual data processing units are established as software modules, the data distribution circuit may comprise a software interface being configured to distribute the data packets and/or bulks of data packets to the individual data processing units.

For example, the data distribution circuit is configured to forward the data packets and/or the bulks of data packets to be analyzed to a predetermined one of the data processing units if the analysis result obtained by the previous data processing units is a first predetermined analysis result. The data distribution circuit may be configured to forward the data packets and/or the bulks of data packets to be analyzed to another predetermined one of the data processing units if the analysis result obtained by the previous data processing units is a second predetermined analysis result.

According to an aspect of the present invention, data streams associated with at least two data processing units of the plurality of data processing units are established as a bulk of data packets, respectively, particularly wherein data streams associated with each data processing unit of the plurality of data processing units are established as a bulk of data packets. Thus, at least two of the data processing units process a bulk of data packets instead of individual data packets. Accordingly, an even higher data analysis rate can be achieved.

According to another aspect of the present invention, the first data processing unit and the second data processing unit are arranged in parallel. Thus, the first data processing unit and the second data processing unit may process the same data stream or two different data streams in parallel, thereby further increasing the data analysis rate that can be achieved by the system.

In other words, two different properties of a single data stream may be analyzed by means of the first data processing unit and the second data processing unit simultaneously.

Moreover, two different portions of the same data stream may be analyzed simultaneously by the different data processing units, thereby providing two analysis results simultaneously, which relate to the different portions processed.

Alternatively or additionally, two different data streams may be analyzed by means of the first data processing unit and the second data processing unit simultaneously.

For example, a first data stream may be analyzed via the first data processing unit by means of the first deep packet inspection technique, and a second data stream may be analyzed via the second data processing unit by means of the second deep packet inspection technique.

Afterwards, the first data stream may be analyzed via the second data processing unit by means of the second deep packet inspection technique, and the second data stream may be analyzed via the first data processing unit by means of the first deep packet inspection technique

In a further embodiment of the present invention, the first data processing unit and the second data processing unit are serially connected. Thus, a single data stream may be analyzed by means of the first data processing unit and the second data processing unit consecutively. In other words, different properties of the same data stream may be analyzed consecutively by means of the first deep packet inspection technique and the second deep packet inspection technique consecutively. In addition, the latter data processing unit, e.g. the second data processing unit, may only analyze a certain portion of the data stream depending on the analysis result of the previous data processing unit, e.g. the first data processing unit. The certain portion may be the same one or rather a portion that is associated with the one analyzed by the previous data processing unit, e.g. the first data processing unit.

According to another aspect of the present invention, the plurality of data processing units is arranged in a series connection and/or in a parallel connection. Particularly, the system may comprise a plurality of signal processing channels, wherein each signal processing channel comprises a plurality of signal processing units being arranged in a series connection and/or in a parallel connection.

According to an aspect of the present invention, the first data processing unit and the second data processing unit are associated with the same data stream. In other words, data packets analyzed by the first data processing unit and the second data processing unit are at least partially the same or originate from a common bulk of data packets. Alternatively or additionally, the bulk(s) of data packets analyzed by the first data processing unit and the second data processing unit is (are) the same.

According to another aspect of the present invention, the first data processing unit and the second data processing unit are associated with different portions of a data stream and/or with different data streams. In other words, the first data processing unit and the second data processing unit analyze different bulks of data packets. Alternatively or additionally, the data packets analyzed by the first data processing unit and the second data processing unit may originate from different bulks of data packets.

Particularly, the data processing units are each configured to analyze data packets and/or bulks of data packets by means of a deep packet inspection technique, thereby obtaining data information. Accordingly, data information about the respectively associated data packets and/or bulks of data packets is obtained by each of the data processing units.

In an embodiment of the present invention, every data processing unit is configured to analyze data packets and/or bulks of data packets by means of a different deep packet inspection technique. Accordingly, different data information about the respectively associated data packets and/or bulks of data packets is obtained by each of the data processing units. As already described above, this modular approach allows for an increased flexibility of scheduling the analysis of different aspects of the data stream(s). Moreover, it has turned out that the overall analysis performance of the system increases due to this modular approach.

In a further embodiment of the present invention, the data information is associated with properties of a bulk of data packets as a whole and/or with properties of individual data packets.

For example, the data information may relate to the type of data stream comprising the bulk(s) of data packets and/or the data packets. Particularly, the data information may comprise the information whether the associated data stream is a video stream, an audio stream and/or another type of data stream.

Alternatively or additionally, the data information may comprise a number of occurrences of a predetermined data content, for example a number of occurrences of a predetermined word or expression.

Alternatively or additionally, the data information may comprise information regarding a used data protocol, a data protocol violation, data content, unwanted data content, an origin of the respective bulk of data packets (e.g. an associated IP address), an origin of the respective data packet (e.g. an associated IP address), a size of the respective bulk of data packets, and/or a size of the respective data packet.

According to the invention, the problem further is solved by a data traffic analysis method according to claim 11.

Regarding the advantages and further properties of the data traffic analysis method, reference is made to the explanations given above with respect to the system, which also hold for the data traffic analysis method and vice versa.

According to an aspect of the present invention, the first data information and the second data information are each associated with properties of a bulk of data packets as a whole and/or with properties of individual data packets.

For example, the data information may relate to the type of data stream comprising the bulk(s) of data packets and/or the data packets. Particularly, the data information may comprise the information whether the associated data stream is a video stream, an audio stream and/or another type of data stream.

Alternatively or additionally, the data information may comprise a number of occurrences of a predetermined data content, for example a number of occurrences of a predetermined word or expression.

Alternatively or additionally, the data information may comprise information regarding a used data protocol, a data protocol violation, data content, unwanted data content, an origin of the respective bulk of data packets (e.g. an associated IP address), an origin of the respective data packet (e.g. an associated IP address), a size of the respective bulk of data packets, and/or a size of the respective data packet.

According to another aspect of the present invention, the at least one data stream is analyzed by means of the first data processing unit and the second data processing unit serially or in parallel.

Thus, the first data processing unit and the second data processing unit may process the same data stream or two different data streams in parallel, thereby further increasing the data analysis rate that can be achieved by the system.

In other words, two different properties of a single data stream may be analyzed by means of the first data processing unit and the second data processing unit simultaneously.

Alternatively or additionally, two different data streams may be analyzed by means of the first data processing unit and the second data processing unit simultaneously.

For example, a first data stream may be analyzed via the first data processing unit by means of the first deep packet inspection technique, and a second data stream may be analyzed via the second data processing unit by means of the second deep packet inspection technique.

Afterwards, the first data stream may be analyzed via the second data processing unit by means of the second deep packet inspection technique, and the second data stream may be analyzed via the first data processing unit by means of the first deep packet inspection technique

If the at least one data stream is analyzed by means of the first data processing unit and the second data processing unit serially, different properties of the same data stream are analyzed consecutively by means of the first deep packet inspection technique and the second deep packet inspection technique.

Therein and in the following, the terms "module" and "unit" are understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a system for analyzing data traffic according to the invention;
- Figure 2 shows a flow chart of a data traffic analysis method according to the present disclosure.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

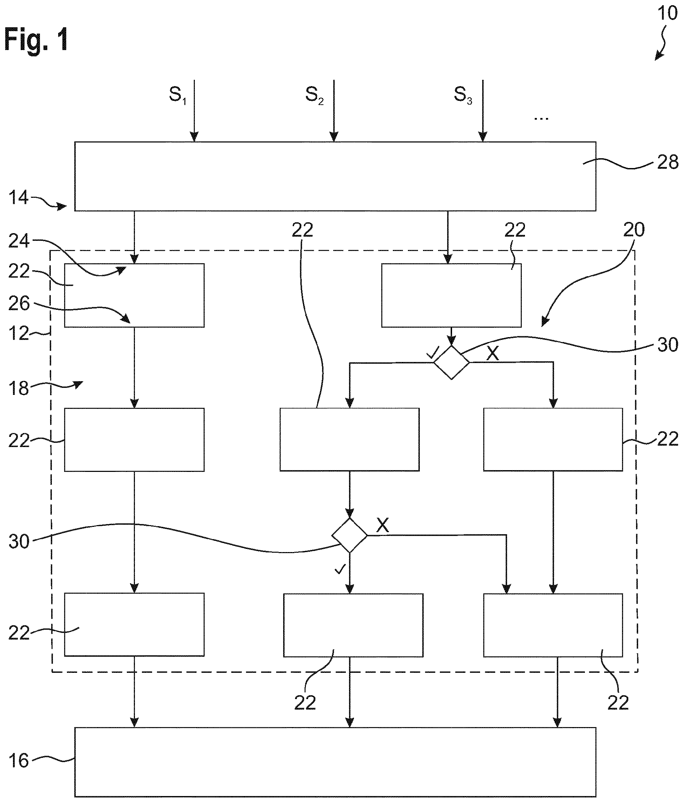

Figure 1 schematically shows a system 10 for analyzing data traffic.

The system 10 comprises a data processing module 12, a data distribution circuit 14, and an analysis module 16.

The data processing module 12 comprises a first data processing channel 18 and a second data processing channel 20.

The first data processing channel 18 and the second data processing channel 20 are arranged in parallel.

It is noted that the data processing module 12 may comprise any other number of data processing channels other than two, for example one, three, four or more.

The first data processing channel 18 comprises three data processing units 22 that are connected to each other in a serial connection.

The first data processing channel 18 may comprise any other number of data processing units other than three, for example one, two, four or more.

The second data processing channel 20 comprises five data processing units 22 that are connected to each other in a combination of serial connections and parallel connections.

Of course, the second data processing channel 20 may comprise any other number of data processing units other than five, for example one, two, three, four, or more than five.

The data processing units 22 each comprise a data input 24 for receiving a data stream and a result output 26 for outputting an analysis result and for forwarding the respective data stream.

It is noted that the data input 24 and the result output 26 are only explicitly shown for one of the data processing units 22 in order to enhance the legibility of Figure 1.

The individual data processing units 22 may be established in hardware and/or software, respectively. For example, each data processing unit 22 may be established as a computer program being executed on one or several CPUs, on one or several GPUs, or on other suitable types of electronic processing circuitry.

The individual data processing units 22 may all be part of the same computer system, for example the same server, or may be established on different computer systems, e.g. on different servers.

The data distribution circuit 14 comprises a first data distribution unit 28 being configured to receive and distribute data streams *sᵢ* to the data processing channels 18, 20, wherein i is an integer bigger than or equal to 1.

More precisely, the first data distribution unit 28 is configured to distribute data packets and/or bulks of data packets that are associated with the data streams *sᵢ* to the data processing channels 18, 20.

The data streams *sᵢ* may be established as a video stream, an audio stream, and/or as any other type of data stream, respectively.

The data distribution circuit 14 further comprises connectors, cables, wireless connections, and/or further data distribution units 30 that are configured to distribute the data streams after a first processing by the data processing units 22 being immediately connected with the first data distribution unit 28.

Alternatively or additionally, if the individual data processing units 22 are established as software modules, the data distribution circuit 14 may comprise a software interface being configured to distribute the data packets and/or bulks of data packets that are associated with the data streams *sᵢ* to the individual data processing units 22.

The functionality of the data distribution circuit 14 will be explained in more detail below.

The analysis module 16 is connected to each of the data processing channels 18, 20. More precisely, the analysis module 16 is connected to the data processing units 22 being arranged at the end of each data processing channel 18, 20.

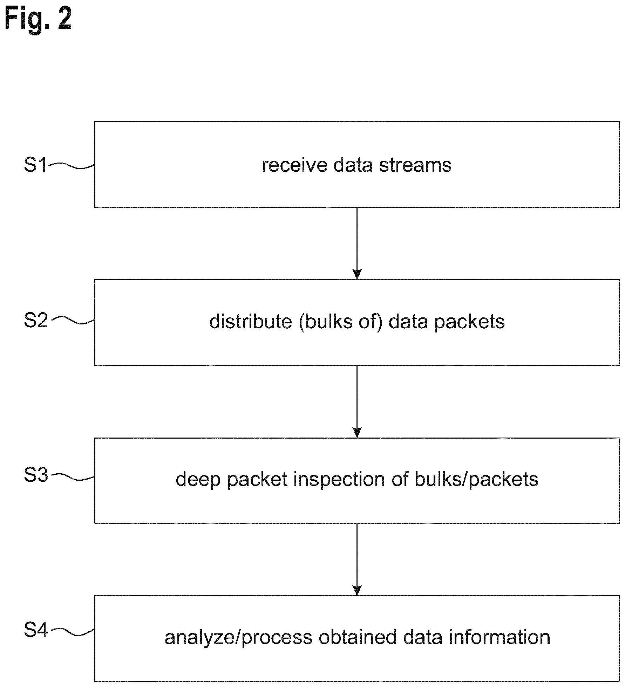

The system 10 is configured to perform a data traffic analysis method that is described in the following with reference to Figure 2.

The data streams *sᵢ* are received via the data distribution circuit 14, more precisely via the first data distribution unit 28 (step S1).

Therein, at least one of the data streams *sᵢ* comprises a bulk of data packets. Particularly, several or even all of the received data streams *sᵢ* comprise a bulk of data packets, respectively.

The data packets or rather the bulks of data packets comprised in the received data streams are distributed to the first data processing channel 18 and to the second data processing channel 20 (step S2).

The data packets or rather the bulks of data packets are processed by means of the data processing units 22, thereby obtaining data information about the data packets or rather about the bulks of data packets (step S3).

This step is described for each of the two processing channels 18, 20 in more detail below.

In general, each data processing unit 22 within the first data processing channel 18 is configured to analyze the received data packets and/or the received bulks of data packets based on a different deep packet inspection technique.

Accordingly, each data processing unit 22 within the first data processing channel 18 processes the received data packets and/or the received bulks of data packets by means of a different predetermined deep packet inspection technique, thereby obtaining different data information.

In general, the data information is associated with properties of a bulk of data packets as a whole and/or with properties of individual data packets.

Thus, in the particular example of Figure 1, three different properties of the data packets or rather the bulks of data packets distributed to the first data processing channel 18 are analyzed by means of the three data processing units 22 of the first data processing channel 18 consecutively.

In other words, the same data packets, the same bulk(s) of data packets and/or the same data streams are analyzed by all of the data processing units 22 of the first data processing channel 18 consecutively.

For example, the data information may relate to the type of the data stream *sᵢ* comprising the bulk(s) of data packets and/or the data packets. Particularly, the data information may comprise the information whether the associated data stream *sᵢ* is a video stream, an audio stream and/or another type of data stream.

Alternatively or additionally, the data information may comprise a number of occurrences of a predetermined data content, for example a number of occurrences of a predetermined word or expression.

Alternatively or additionally, the data information may comprise information regarding a used data protocol, a data protocol violation, data content, unwanted data content, an origin of the respective bulk of data packets (e.g. an associated IP address), an origin of the respective data packet (e.g. an associated IP address), a size of the respective bulk of data packets, and/or a size of the respective data packet.

Regarding the second data processing channel 20, each data processing unit 22 within the second data processing channel 20 is configured to analyze the received data packets and/or the received bulks of data packets based on a different deep packet inspection technique.

Accordingly, each data processing unit 22 within the second data processing channel 20 processes the received data packets and/or the received bulks of data packets by means of a different predetermined deep packet inspection technique, thereby obtaining different data information.

Thus, in the particular example of Figure 1, five different properties of the data packets or rather the bulks of data packets distributed to the second data processing channel 20 are analyzed by means of the five data processing units 22 of the second data processing channel 20.

It is noted that while the data processing units 22 within each data processing channel 18, 20 are configured to have a different deep packet inspection functionality, at least one of the data processing units 22 of the first data processing channel 18 may have the same deep packet inspection functionality as at least one of the data processing units 22 of the second data processing channel 20.

Within the second data processing channel 20, the data distribution circuit 14 distributes the data packets and/or bulks of data packets to be analyzed based on analysis results obtained by the individual data processing units 22.

More precisely, the further data distribution units 30 provide conditional connections between the data processing units 22 based on the respective analysis results obtained by the data processing units 22 immediately upstream of the respective further data distribution unit 30.

In the specific example shown in Figure 1, the further data distribution units 30 distinguish between two different possible outcomes (e.g. "yes" or "no"), and thus connect the data processing units 22 immediately upstream of the respective further data distribution unit 30 with two data processing units 22 downstream of the further data distribution unit 30, respectively.

Thus, the further data distribution units 30 forward the data packets and/or the bulks of data packets to be analyzed to a predetermined one of the data processing units 22 if the analysis result obtained by the previous data processing units is a first predetermined analysis result (e.g. "yes").

The further data distribution units 30 forward the data packets and/or the bulks of data packets to be analyzed to another predetermined one of the data processing units 22 if the analysis result obtained by the previous data processing units is a second predetermined analysis result (e.g. "no").

Of course, more than two different analysis results may be possible. Accordingly, the further data distribution units 30 may respectively connect more than two downstream data processing units 22 with an upstream data processing unit 22.

The data information obtained by means of the data processing units 22 may be forwarded to the analysis module 16 for further analysis and/or data processing (step S4).

For example, the data information may be statistically analyzed, converted into a predetermined file format, converted into a graphic representation, and/or displayed on a display of a user-side device.

With the system 10, bulks of data packets can be processed instead of individual data packets. Particularly, all data processing units 22 may respectively process a bulk of data packets instead of individual data packets.

Due to this bulk-processing approach, a higher data analysis rate can be achieved than by analyzing individual data packets.

Moreover, the different deep packet inspection techniques are not carried out by a single data processing unit 22. Instead, the different deep packet inspection techniques are allocated to different data processing units 22.

Due to the distribution of different deep packet inspection functionalities to different data processing units 22, an increased flexibility for scheduling the analysis of different aspects of the data stream(s) *sᵢ* is obtained.

It has turned out that the overall performance of the system 10 increases due to this modular approach.

Certain embodiments disclosed herein, particularly the respective module(s) and unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A system for analyzing data traffic, wherein the system (10) comprises a data processing module (12), wherein the data processing module (12) comprises a plurality of data processing units (22), wherein the plurality of data processing units (22) comprise a first data processing unit and a second data processing unit,
wherein the data processing units (22) each comprise a data input (24) for receiving a data stream (*sᵢ*) and a result output (26) for outputting an analysis result,
wherein the first data processing unit is configured to analyze data packets and/or bulks of data packets by means of a first deep packet inspection technique,
wherein the second data processing unit is configured to analyze data packets and/or bulks of data packets by means of a second deep packet inspection technique,
wherein the first deep packet inspection technique is different from the second deep packet inspection technique,
wherein a data stream (*sᵢ*) being associated with the first data processing unit and/or the second data processing unit is a bulk of data packets,
wherein the system (10) comprises a data distribution circuit (14), the data distribution circuit (14) being configured to distribute data packets and/or bulks of data packets to be analyzed to the plurality of data processing units (22), and
wherein the data distribution circuit (14) is configured to distribute the data packets and/or bulks of data packets to be analyzed based on analysis results obtained by the individual data processing units (22), wherein the data distribution circuit (14) is configured to provide conditional connections between the data processing units (22).

2. The system of claim 1, **characterized in that** data streams (*sᵢ*) associated with at least two data processing units (22) of the plurality of data processing units (22) are established as a bulk of data packets, respectively, particularly wherein data streams (*sᵢ*) associated with each data processing unit (22) of the plurality of data processing units (22) are established as a bulk of data packets.

3. The system according to any of the preceding claims, **characterized in that** the first data processing unit and the second data processing unit are arranged in parallel.

4. The system according to any of the claims 1 to 3, **characterized in that** the first data processing unit and the second data processing unit are serially connected.

5. The system according to any of the preceding claims, **characterized in that** the plurality of data processing units (22) is arranged in a series connection and/or in a parallel connection.

6. The system according to any of the preceding claims, **characterized in that** the first data processing unit and the second data processing unit are associated with the same data stream (*sᵢ*).

7. The system according to any of the preceding claims, **characterized in that** the first data processing unit and the second data processing unit are associated with different portions of a data stream (*sᵢ*) and/or with different data streams (*sᵢ*).

8. The system according to any of the preceding claims, **characterized in that** the data processing units (22) are each configured to analyze data packets and/or bulks of data packets by means of a deep packet inspection technique, thereby obtaining data information.

9. The system according to claim 8, **characterized in that** every data processing unit (22) is configured to analyze data packets and/or bulks of data packets by means of a different deep packet inspection technique.

10. The system according to claim 8 or 9, **characterized in that** the data information is associated with properties of a bulk of data packets as a whole and/or with properties of individual data packets.

11. A data traffic analysis method for analyzing data traffic by means of a system (10) for analyzing data traffic according to any of the preceding claims, the data traffic analysis method comprising the following steps:
- receiving at least one data stream (*sᵢ*) comprising a bulk of data packets;
- analyzing the at least one data stream (*sᵢ*) by means of the first data processing unit via a first deep packet inspection technique, thereby obtaining first data information; and
- analyzing the at least one data stream (*sᵢ*) by means of the second data processing unit via a second deep packet inspection technique, thereby obtaining second data information;
wherein the first deep packet inspection technique is different from the second deep packet inspection technique, such that different data information regarding the at least one data stream (*sᵢ*) is obtained by means of the first data processing unit and the second data processing unit,
data packets and/or bulks of data packets to be analyzed are distributed to the to the plurality of data processing units (22) by means of the data distribution circuit (14), and
wherein the data packets and/or bulks of data packets to be analyzed are distributed by means of the data distribution circuit (14) based on analysis results obtained by the individual data processing units (22), wherein conditional connections are provided between the data processing units (22) by means of the data distribution circuit (14).

12. The data traffic analysis method of claim 11, **characterized in that** the first data information and the second data information are each associated with properties of a bulk of data packets as a whole and/or with properties of individual data packets.

13. The data traffic analysis method of claim 11 or 12, **characterized in that** the at least one data stream (*sᵢ*) is analyzed by means of the first data processing unit and the second data processing unit serially or in parallel.

## Patentansprüche

1. System zum Analysieren von Datenverkehr, wobei das System (10) ein Datenverarbeitungsmodul (12) umfasst, wobei das Datenverarbeitungsmodul (12) eine Vielzahl von Datenverarbeitungseinheiten (22) umfasst, wobei die Vielzahl von Datenverarbeitungseinheiten (22) eine erste Datenverarbeitungseinheit und eine zweite Datenverarbeitungseinheit umfasst,
wobei die Datenverarbeitungseinheiten (22) jeweils einen Dateneingang (24) zum Empfangen eines Datenstroms (*sᵢ*) und einen Ergebnisausgang (26) zum Ausgeben eines Analyseergebnisses umfassen,
wobei die erste Datenverarbeitungseinheit konfiguriert ist, um Datenpakete und/oder Massen von Datenpaketen mittels einer ersten Deep-Packet-Inspection-Technik zu analysieren,
wobei die zweite Datenverarbeitungseinheit konfiguriert ist, um Datenpakete und/oder Massen von Datenpaketen mittels einer zweiten Deep-Packet-Inspection-Technik zu analysieren,
wobei sich die erste Deep-Packet-Inspection-Technik von der zweiten Deep-Packet-Inspection-Technik unterscheidet,
wobei ein Datenstrom (*sᵢ*), der der ersten Datenverarbeitungseinheit und/oder der zweiten Datenverarbeitungseinheit zugeordnet ist, eine Masse von Datenpaketen ist,
wobei das System (10) eine Datenverteilungsschaltung (14) umfasst, wobei die Datenverteilungsschaltung (14) konfiguriert ist, um zu analysierende Datenpakete und/oder Massen von Datenpaketen an die Vielzahl von Datenverarbeitungseinheiten (22) zu verteilen, und
wobei die Datenverteilungsschaltung (14) konfiguriert ist, um die zu analysierenden Datenpakete und/oder Massen von Datenpaketen basierend auf Analyseergebnissen zu verteilen, die durch die einzelnen Datenverarbeitungseinheiten (22) erhalten werden, wobei die Datenverteilungsschaltung (14) konfiguriert ist, um bedingte Verbindungen zwischen den Datenverarbeitungseinheiten (22) bereitzustellen.

2. System nach Anspruch 1, **dadurch gekennzeichnet, dass** Datenströme (*sᵢ*), die mindestens zwei Datenverarbeitungseinheiten (22) der Vielzahl von Datenverarbeitungseinheiten (22) zugeordnet sind, jeweils als eine Masse von Datenpaketen erstellt werden, insbesondere wobei Datenströme (*sᵢ*), die jeder Datenverarbeitungseinheit (22) der Vielzahl von Datenverarbeitungseinheiten (22) zugeordnet sind, als eine Masse von Datenpaketen erstellt werden.

3. System nach einem der vorstehenden Ansprüche,
**dadurch gekennzeichnet, dass** die erste Datenverarbeitungseinheit und die zweite Datenverarbeitungseinheit parallel angeordnet sind.

4. System nach einem der Ansprüche 1 bis 3, **dadurch gekennzeichnet, dass** die erste Datenverarbeitungseinheit und die zweite Datenverarbeitungseinheit seriell verbunden sind.

5. System nach einem der vorstehenden Ansprüche,
**dadurch gekennzeichnet, dass** die Vielzahl von Datenverarbeitungseinheiten (22) in einer Reihenschaltung und/oder in einer Parallelschaltung angeordnet ist.

6. System nach einem der vorstehenden Ansprüche,
**dadurch gekennzeichnet, dass** die erste Datenverarbeitungseinheit und die zweite Datenverarbeitungseinheit dem gleichen Datenstrom (*sᵢ*) zugeordnet sind.

7. System nach einem der vorstehenden Ansprüche,
**dadurch gekennzeichnet, dass** die erste Datenverarbeitungseinheit und die zweite Datenverarbeitungseinheit unterschiedlichen Abschnitten eines Datenstroms (*sᵢ*) und/oder unterschiedlichen Datenströmen (*sᵢ*) zugeordnet sind.

8. System nach einem der vorstehenden Ansprüche,
**dadurch gekennzeichnet, dass** die Datenverarbeitungseinheiten (22) jeweils konfiguriert sind, um Datenpakete und/oder Massen von Datenpaketen mittels einer Deep-Packet-Inspection-Technik zu analysieren, wobei dadurch Dateninformationen erhalten werden.

9. System nach Anspruch 8, **dadurch gekennzeichnet, dass** jede Datenverarbeitungseinheit (22) konfiguriert ist, um Datenpakete und/oder Massen von Datenpaketen mittels einer unterschiedlichen Deep-Packet-Inspection-Technik zu analysieren.

10. System nach Anspruch 8 oder 9, **dadurch gekennzeichnet, dass** die Dateninformationen Eigenschaften einer Masse von Datenpaketen als ein Ganzes und/oder Eigenschaften einzelner Datenpakete zugeordnet sind.

11. Datenverkehrsanalyseverfahren zum Analysieren von Datenverkehr mittels eines Systems (10) zum Analysieren von Datenverkehr nach einem der vorstehenden Ansprüche, das Datenverkehrsanalyseverfahren umfassend die folgenden Schritte:
- Empfangen von mindestens einem Datenstrom (*sᵢ*), umfassend eine Masse von Datenpaketen;
- Analysieren des mindestens einen Datenstroms (*sᵢ*) mittels der ersten Datenverarbeitungseinheit über eine erste Deep-Packet-Inspection-Technik, wobei dadurch erste Dateninformationen erhalten werden; und
- Analysieren des mindestens einen Datenstroms (*sᵢ*) mittels der zweiten Datenverarbeitungseinheit über eine zweite Deep-Packet-Inspection-Technik, wobei dadurch zweite Dateninformationen erhalten werden;
wobei sich die erste Deep-Packet-Inspection-Technik von der zweiten Deep-Packet-Inspection-Technik derart unterscheidet, dass mittels der ersten Datenverarbeitungseinheit und der zweiten Datenverarbeitungseinheit unterschiedliche Dateninformationen bezüglich des mindestens einen Datenstroms (si) erhalten werden,
zu analysierende Datenpakete und/oder Massen von Datenpaketen mittels der Datenverteilungsschaltung (14) an die Vielzahl von Datenverarbeitungseinheiten (22) verteilt werden, und
wobei die zu analysierenden Datenpakete und/oder Massen von Datenpaketen mittels der Datenverteilungsschaltung (14) basierend auf Analyseergebnissen verteilt werden, die durch die einzelnen Datenverarbeitungseinheiten (22) erhalten werden, wobei mittels der Datenverteilungsschaltung (14) bedingte Verbindungen zwischen den Datenverarbeitungseinheiten (22) bereitgestellt werden.

12. Datenverkehrsanalyseverfahren nach Anspruch 11,
**dadurch gekennzeichnet, dass** die ersten Dateninformationen und die zweiten Dateninformationen jeweils Eigenschaften einer Masse von Datenpaketen als ein Ganzes und/oder Eigenschaften einzelner Datenpakete zugeordnet sind.

13. Datenverkehrsanalyseverfahren nach Anspruch 11 oder 12,
**dadurch gekennzeichnet, dass** der mindestens eine Datenstrom (*sᵢ*) mittels der ersten Datenverarbeitungseinheit und der zweiten Datenverarbeitungseinheit seriell oder parallel analysiert wird.

## Revendications

1. Système permettant d'analyser un trafic de données, dans lequel le système (10) comprend un module de traitement de données (12), dans lequel le module de traitement de données (12) comprend une pluralité d'unités de traitement de données (22), dans lequel la pluralité d'unités de traitement de données (22) comprend une première unité de traitement de données et une seconde unité de traitement de données,
dans lequel les unités de traitement de données (22) comprennent chacune une entrée de données (24) permettant de recevoir un flux de données(*sᵢ*) et une sortie de résultats (26) permettant de produire un résultat d'analyse,
dans lequel la première unité de traitement de données est configurée pour analyser les paquets de données et/ou les masses de paquets de données au moyen d'une première technique d'inspection approfondie des paquets,
dans lequel la seconde unité de traitement des données est configurée pour analyser les paquets de données et/ou les masses de paquets de données au moyen d'une seconde technique d'inspection approfondie des paquets,
dans lequel la première technique d'inspection approfondie des paquets est différente de la seconde technique d'inspection approfondie des paquets,
dans lequel un flux de données (*sᵢ*) associé à la première unité de traitement des données et/ou à la seconde unité de traitement des données est une masse de paquets de données,
dans lequel le système (10) comprend un circuit de distribution de données (14), le circuit de distribution de données (14) étant configuré pour distribuer des paquets de données et/ou des masses de paquets de données à analyser à la pluralité d'unités de traitement de données (22), et
dans lequel le circuit de distribution de données (14) est configuré pour distribuer les paquets de données et/ou les masses de paquets de données à analyser sur la base des résultats d'analyse obtenus par les unités de traitement de données (22) individuelles, le circuit de distribution de données (14) étant configuré pour fournir des connexions conditionnelles entre les unités de traitement de données (22).

2. Système de la revendication 1, **caractérisé en ce que** les flux de données (*sᵢ*) associés à au moins deux unités de traitement de données (22) de la pluralité d'unités de traitement de données (22) sont établis en tant que masse de paquets de données, respectivement, en particulier dans lequel les flux de données (*sᵢ*) associés à chaque unité de traitement de données (22) de la pluralité d'unités de traitement de données (22) sont établis en tant que masse de paquets de données.

3. Système selon l'une des revendications précédentes,
**caractérisé en ce que** la première unité de traitement de données et la seconde unité de traitement de données sont disposées en parallèle.

4. Système selon l'une des revendications 1 à 3, **caractérisé en ce que** la première unité de traitement de données et la seconde unité de traitement de données sont connectées en série.

5. Système selon l'une quelconque des revendications précédentes, **caractérisé en ce que** la pluralité d'unités de traitement de données (22) est disposée en connexion série et/ou en connexion en parallèle.

6. Système selon l'une quelconque des revendications précédentes, **caractérisé en ce que** la première unité de traitement de données et la seconde unité de traitement de données sont associées au même flux de données (*sᵢ*).

7. Système selon l'une des revendications précédentes,
**caractérisé en ce que** la première unité de traitement de données et la seconde unité de traitement de données sont associées à différentes parties d'un flux de données (*sᵢ*) et/ou à différents flux de données (*sᵢ*).

8. Système selon l'une des revendications précédentes,
**caractérisé en ce que** les unités de traitement de données (22) sont chacune configurées pour analyser les paquets de données et/ou les masses de paquets de données au moyen d'une technique d'inspection approfondie des paquets, permettant ainsi d'obtenir des informations sur les données.

9. Système selon la revendication 8, **caractérisé en ce que** chaque unité de traitement de données (22) est configurée pour analyser les paquets de données et/ou les masses de paquets de données au moyen d'une technique différente d'inspection approfondie des paquets.

10. Système selon la revendication 8 ou 9, **caractérisé en ce que** les informations sur les données sont associées aux propriétés d'une masse de paquets de données dans son ensemble et/ou aux propriétés de paquets de données individuels.

11. Procédé d'analyse du trafic de données permettant d'analyser un trafic de données au moyen d'un système (10) permettant d'analyser un trafic de données selon l'une quelconque des revendications précédentes, le procédé d'analyse du trafic de données comprenant les étapes suivantes :
- la réception au moins d'un flux de données (*sᵢ*) comprenant une masse de paquets de données ;
- l'analyse de l'au moins un flux de données (*sᵢ*) au moyen de la première unité de traitement des données par l'intermédiaire d'une première technique d'inspection approfondie des paquets, permettant ainsi d'obtenir les premières informations sur les données ; et
- l'analyse de l'au moins un flux de données (*sᵢ*) au moyen de la seconde unité de traitement de données par l'intermédiaire d'une seconde technique d'inspection approfondie des paquets, permettant ainsi d'obtenir les secondes informations sur les données ;
dans lequel la première technique d'inspection approfondie des paquets est différente de la seconde technique d'inspection approfondie des paquets, de telle sorte que des informations sur les données différentes concernant au moins un flux de données (*sᵢ*) sont obtenues au moyen de la première unité de traitement des données et de la seconde unité de traitement de données,
les paquets de données et/ou les masses de paquets de données à analyser sont distribués à la pluralité d'unités de traitement de données (22) au moyen du circuit de distribution de données (14), et
dans lequel les paquets de données et/ou les masses de paquets de données à analyser sont distribués au moyen du circuit de distribution de données (14) sur la base des résultats d'analyse obtenus par les unités de traitement de données (22) individuelles, des connexions conditionnelles étant assurées entre les unités de traitement de données (22) au moyen du circuit de distribution de données (14).

12. Procédé d'analyse du trafic de données de la revendication 11, **caractérisé en ce que** les premières informations sur les données et les secondes informations sur les données sont chacune associées à des propriétés d'une masse de paquets de données dans son ensemble et/ou à des propriétés de paquets de données individuels.

13. Procédé d'analyse du trafic de données de la revendication 11 ou 12, **caractérisé en ce que** l'au moins un flux de données (*sᵢ*) est analysé au moyen de la première unité de traitement de données et de la seconde unité de traitement de données en connexion en série ou en connexion en parallèle.
